# FASCICULE DE BREVET EUROPEEN

(11) **EP 3 600 682 B1**
(45) Date de publication et mention de la délivrance du brevet: **17.08.2022**
(21) Numéro de dépôt: 17816940.5
(22) Date de dépôt: 30.11.2017
(51) Int. Cl.: B05B 1/30, B05B 1/32, B05B 7/08, B05B 15/65, B01F 35/91, A21C 1/14

(54) **DISPOSITIF D'INJECTION D'UN FLUIDE CRYOGENIQUE PAR LE BAS D'UN MELANGEUR**
KRYOGENES FLÜSSIGKEITSINJEKTIONSSYSTEM ZUR INJEKTION IM NIEDRIGEREN TEIL EINES MISCHERS
CRYOGENIC FLUID INJECTION SYSTEM INTO THE LOWER PART OF A MIXER

(30) Priorité: 23.03.2017 FR 1752391
(43) Date de publication de la demande: 05.02.2020
(73) Titulaire: Air Liquide France Industrie, 75007 Paris (FR); L'AIR LIQUIDE, Société Anonyme pour l'Etude et l'Exploitation des Procédés Georges Claude, 75007 Paris (FR)
(72) Inventeur: ALGOET, Jo, 1578953 Wijtschate Heuvelland (BE); BRANGEON, Alain, 56520 Guidel (FR); PICHOU, Michel, 75007 Paris (FR); REYMOND, Christian, 95160 Montmorency (FR)
(74) Mandataire: Air Liquide
(86) Numéro de dépôt international: PCT/FR2017/053293
(87) Numéro de publication internationale: WO 2018/172627

(56) Documents cités:
- EP-A1- 2 309 160
- WO-A1-2015/075255
- WO-A2-2008/007000
- FR-A1- 2 939 056
- US-A1- 2006 180 682
- US-A1- 2007 102 841

## Description

La présente invention est relative à un dispositif d'injection d'un fluide, en particulier un dispositif destiné à injecter, dans une enceinte, un fluide cryogénique, sous une pression supérieure à celle qui règne dans l'enceinte. On pourra parler dans ce qui suit de « dispositif d'injection » ou de « buse d'injection ».

Il est connu de refroidir le contenu d'un malaxeur ou d'un pétrin en introduisant du CO2 liquide ou de l'azote liquide (LN2) à la base de la cuve du malaxeur ou pétrin. Le fluide, introduit sous pression par l'intermédiaire d'une buse d'injection, se transforme, dès sa détente, dans la buse, en solide, et en gaz froid. Le solide ou le liquide se mélange au contenu du malaxeur et le refroidit, cependant que le gaz froid contribue également au refroidissement en traversant l'ensemble de la masse contenue dans la cuve.

Une solution connue pour la mise en œuvre de ce procédé comporte plusieurs dispositifs d'injections, disposés dans le fond de la cuve, et alimentés en fluide par un ensemble de canalisations.

De tels dispositifs d'injection de fluide cryogénique sont décrits dans le document WO 2008/00700. Ils comprennent une tête d'alimentation en fluide et un corps de distribution du fluide, parcourus par des passages de circulation du fluide communiquant les uns avec les autres.

Dans ce type d'installations, les dispositifs d'injection sont susceptibles d'être souillés par différentes salissures, non seulement au niveau de leurs surfaces externes mais également en certaines parties des passages de circulation du fluide. Ils doivent donc pouvoir être démontés en vue d'un nettoyage qui est obligatoire en cas de produits alimentaires et qui peut être rendu nécessaire par un fonctionnement anormal ou encore, par une pollution accidentelle. Les dispositifs d'injection décrit dans le document WO 2008/00700 présentent l'inconvénient d'être d'un nettoyage difficile, en particulier au niveau de leur tête d'alimentation.

La présente invention vise à résoudre les problèmes précédents et propose en ce sens un dispositif d'injection d'un fluide, notamment cryogénique, le dispositif comprenant une tête d'alimentation en fluide et un corps de distribution du fluide, monté de façon détachable sur ladite tête d'alimentation, ladite tête d'alimentation comprenant une gorge de circulation du fluide, alimentant ledit corps, ladite gorge étant fermée en position montée du corps sur la tête d'alimentation et ladite gorge étant ouverte en position démontée de la tête d'alimentation et du corps, le dispositif comprenant une soupape forcée par un ressort contre ledit corps.

Grâce à la configuration ouverte de ladite gorge, l'on dispose d'un passage de circulation du fluide facile d'accès, après démontage du corps et de la tête. Ladite tête de distribution peut donc être maintenue dans un état de propreté optimale sans nécessité des opérations de nettoyage complexes et finalement peu fiables, comme cela était le cas avec les dispositifs de l'état de l'art.

Selon l'invention, ledit dispositif comprend une soupape, ouvrant ou fermant alternativement l'injection du fluide.

Selon différentes caractéristiques supplémentaires de l'invention, qui pourront être prises ensemble ou séparément :
- ledit corps présente un ou plusieurs canaux de circulation du fluide, définissant en combinaison une section de passage du fluide dans le corps,
- ladite gorge présentant une section de passage du fluide supérieure à la section de passage du fluide dans le corps,
- ladite gorge présente une profondeur sensiblement constante,
- ladite gorge présente une section en U,
- ladite gorge est annulaire,
- une première partie de ladite gorge présente une profondeur réduite et une seconde partie présente une profondeur plus importante, formant une cavité,
- ladite première partie de la gorge et ladite seconde partie de la gorge sont complémentaires et forment l'intégralité de la gorge,
- ladite seconde partie de la gorge présente une étendue angulaire comprise entre 30° et 90°,
- ledit conduit débouche sur une paroi latérale de la gorge, notamment au niveau de ladite cavité,
- ladite tête d'alimentation comprend un conduit de circulation du fluide,
- ledit conduit débouche sur une paroi de fond de la gorge,
- ladite tête présente une face au niveau de laquelle ladite gorge débouche en position démontée de la tête d'alimentation et du corps,
- ladite tête s'étend selon une direction longitudinale orthogonale à ladite face,
- ladite gorge présente une profondeur supérieure au trois quart d'une extension de ladite tête d'alimentation selon ladite direction longitudinale,
- ledit dispositif comprend un joint fermant ladite gorge,
- ledit joint est pris en sandwich entre ladite tête et ledit corps,
- ledit joint présente des orifices débouchant dans lesdits canaux du corps,
- lesdits de canaux de circulation du fluide forment un faisceau,
- ledit faisceau de canaux et ladite gorge sont disposés de façon coaxiale,
- lesdits canaux sont régulièrement répartis angulairement,
- lesdits canaux sont au nombre de trois au moins,
- ladite tête présente un puit de déplacement de la soupape, ledit puit et ladite gorge étant positionnés de façon concentrique.

Selon un autre aspect de l'invention, ledit dispositif comprend une butée, montée sur une tige de la soupape, ledit ressort prenant appui sur ladite butée, ledit ressort comprenant une pluralité de spires et ladite butée et ledit ressort étant configurés pour que la butée vienne en contact avec le corps avant mise en contact des spires du ressort les unes contre les autres lors d'un actionnement de la soupape.

Selon cet aspect de l'invention, on assure une bonne répétabilité de la course de la soupape. On dispose de la sorte d'un dispositif d'injection d'un fluide permettant un contrôle amélioré du débit de fluide.

Selon des caractéristiques supplémentaires de cet aspect de l'invention, qui pourront être prises ensemble ou séparément :
- ladite butée comprend une première pièce, destinée à être standard, et une deuxième pièce, destinée à être spécifique à chaque application,
- ladite tige comprend une portion de diamètre réduit et ladite butée comprend un anneau de montage, ladite tige et ledit anneau de montage étant mutuellement configurés pour permettre un encliquetage dudit anneau sur ladite tige au niveau de ladite portion de diamètre réduit de façon à positionner axialement lesdites premières et/ou seconde pièces de la butée le long de ladite tige,
- ledit anneau de montage est de configuration symétrique de manière à pouvoir être monté dans un sens comme dans l'autre sur la tige de la soupape.

Selon un autre aspect de l'invention, ledit dispositif comprend en outre des moyens de centrage du ressort de manière à tenir ledit ressort radialement à distance de la soupape.

Selon cet aspect de l'invention, qui trouvera son intérêt indépendamment ou en combinaison avec ses précédents aspects, on évite un phénomène d'abrasion du ressort et de la soupape, en particulier de la tige de la soupape, phénomène qui pourrait par contre apparaitre, en absence de guidage, en cas de frottements répétés de la soupape, en particulier de sa tige, contre le ressort, en particulier contre la partie interne de ses spires.

Selon des caractéristiques supplémentaires de cet aspect de l'invention, qui pourront être prises ensemble ou séparément :
- lesdits moyens de centrage comprennent un doigt de centrage d'une première extrémité du ressort, ledit doigt de centrage étant monté sur ladite soupape,
- ledit doigt de centrage est monté sur la tige de la soupape,
- ledit doigt centrage et ladite butée, en particulier la pièce spécifique à chaque application de ladite butée, forment une seule et même pièce,
- lesdits moyens de centrage comprennent une cheminée de guidage d'une seconde extrémité du ressort, ladite cheminée de guidage étant formée dans ledit corps.

Selon un autre aspect de l'invention, ledit dispositif comprend une bride d'assemblage du corps et de la tête de distribution, ledit dispositif étant configuré pour transformer un mouvement de serrage transversale, notamment radiale, de ladite bride, par rapport à un axe d'extension longitudinale dudit dispositif, en un mouvement de serrage de la tête et du corps l'un contre l'autre selon ledit axe d'extension longitudinale.

Selon cet aspect de l'invention, qui trouvera son intérêt indépendamment ou en combinaison avec les précédents aspects, on renforce l'étanchéité du dispositif.

Selon des caractéristiques supplémentaires de cet aspect de l'invention, qui pourront être prises ensemble ou séparément :
- ladite bride ainsi que ladite tête et/ou ledit corps présentent une surface inclinée par rapport audit axe longitudinale, lesdites surfaces inclinées étant destinées à coopérer l'une avec l'autre lors du serrage de la bride,
- ledit dispositif comprend un joint périphérique entre ladite tête d'alimentation et ledit corps.

L'invention porte également sur l'utilisation d'un dispositif d'injection tel que décrit précédemment pour le refroidissement de produit en vrac.

Elle porte encore sur un procédé de refroidissement de matériau en vrac contenu dans une enceinte, selon lequel un fluide cryogénique est injecté au cœur du matériau à refroidir à l'aide d'au moins un dispositif d'injection tel que décrit précédemment, de préférence m dispositifs d'injection tels que décrits précédemment et répartis symétriquement dans la partie basse de l'enceinte, m étant un entier compris entre 2 et 20, de préférence un nombre pair.

De façon avantageuse, l'enceinte est un malaxeur. Le procédé est particulièrement bien adapté pour refroidir tout type de matériau quel que soit son état physique, notamment pour des produits, liquides, pâteux, solides ou pulvérulents.

L'invention va maintenant être exposée de façon plus détaillée à l'aide d'exemples pratiques, illustré avec les dessins, sur lesquels :
- la Figure 1 est une vue schématique en coupe d'une installation comprenant une enceinte et des dispositifs d'injection conformes à l'invention,
- la Figure 2 est une vue, en élévation, d'un dispositif conforme à l'invention,
- la Figure 3 est une vue, en coupe longitudinale, du dispositif de la figure 2,
- la Figure 4 est une vue, en perspective, d'une partie du dispositif de la figure 2, coupée selon le même plan de coupe que celui de la figure 3,
- la Figure 5 reprend la figure 4 selon une première variante de réalisation et selon une orientation légèrement différente,
- la Figure 6 une vue, en perspective, d'une seconde variante de réalisation, conforme à l'invention, de la partie du dispositif illustré aux figures 4 et 5,
- la Figure 7 est une vue, en perspective, de la partie du dispositif illustré à la figure 6, selon un plan de coupe permettant de voir un détail dudit dispositif,
- la Figure 8 est une vue de côté illustrant en transparence une variante de réalisation d'une partie du dispositif conforme à l'invention,
- la Figure 9 est une vue, en perspective, de dessus montrant une variante d'assemblage d'un corps et d'une tête d'un dispositif conforme à l'invention,
- la Figure 10 est une vue schématique illustrant une partie du dispositif illustré à la figure 9, au niveau du plan de coupe P' représenté à cette figure.

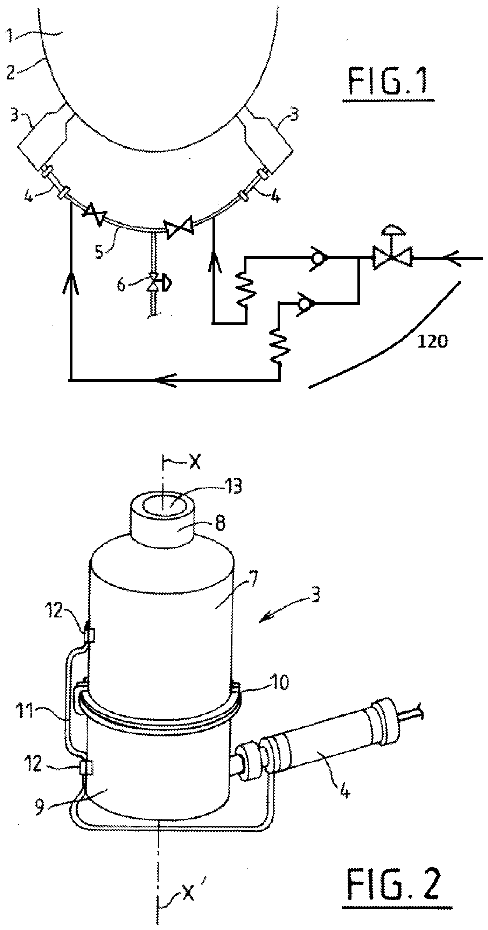

Comme illustré aux figures 1 à 3, l'invention concerne un dispositif 3 d'injection d'un fluide, notamment cryogénique. Il s'agit en particulier d'un dispositif d'injection destiné à être fixé sur la partie inférieure d'un récipient contenant un produit à refroidir en vrac.

Le dispositif selon l'invention est adapté au refroidissement de produit aussi bien sous forme liquide, que pâteuse, solide ou granulaire. Par " produit pâteux ", on entend tout produit dont la viscosité est comprise entre liquide et solide.

Le fluide cryogénique utilisé est de l'azote liquide ou du CO2 liquide notamment quand le produit à refroidir est un produit alimentaire. Cependant, le dispositif selon l'invention peut être mis en œuvre avec tout type de fluide cryogénique.

A titre d'exemple d'utilisation du dispositif conforme à l'invention, la figure 1 montre la partie inférieure d'un récipient formé d'une enceinte 1, notamment une cuve de malaxage, sur la paroi de laquelle sont fixés, de préférence par soudure, deux dispositifs 3 d'injection de fluide cryogénique conformes à l'invention. Les dispositifs 3 sont reliés par un tuyau flexible 4 et un tuyau calorifuge 5 à une électrovanne 6 permettant l'ouverture et la fermeture de l'alimentation en fluide cryogénique. Selon un mode de réalisation avantageux, le dispositif conforme à l'invention est fixé sur la partie inférieure de la cuve de malaxage.

Comme on le développera plus en détails plus loin dans la présente description, la figure 1 montre la présence selon un mode avantageux de mise en oeuvre de l'invention d'une installation 120, permettant l'alimentation des buses 3 en air comprimé :
- une électrovanne alimentant en gaz deux lignes, une ligne pour chaque buse 3 ;
- chaque ligne est munie d'un clapet anti-retour suivi d'un système de type « queue de cochon », la présence du clapet anti-retour étant avantageuse pour garantir que du cryogène (de l'azote ou du CO₂ ) ne pourra remonter dans le circuit servant pour l'air comprimé, tandis que la présence des « queues de cochon » est avantageuse pour garantir que le composant en amont (le clapet anti retour) ne sera mis en présence que de gaz, et pas de liquide.

Nous développerons plus loin l'intérêt de ce balayage à l'air comprimé (mais d'autres gaz de balayage pourraient bien sûr être envisagés, l'air comprimé étant peu onéreux).

La figure 2 montre plus en détail un dispositif 3 d'injection conforme à l'invention. Il comprend, dans une partie supérieure, un corps 7 de distribution du fluide et, dans une partie basse, une tête 9 d'alimentation. Le corps 7 et la tête 9 sont montées de façon détachable l'un sur l'autre, notamment par des agrafes d'assemblage 10. Il pourra encore s'agir d'un raccord du type vissé ou analogue.

Ledit dispositif présente, par exemple, une configuration de révolution autour d'un axe longitudinale X-X', ici vertical. Ladite tête d'alimentation 9 et ledit corps 7 s'étendent eux-mêmes selon ledit axe longitudinale X-X' dans la prolongation l'un de l'autre. Une extrémité libre 8 dudit corps 7 formant un col est destinée à être fixée sur la paroi externe de l'enceinte 1.

A la tête 9 dudit dispositif 3 est relié le tuyau flexible 4. Un câble anticorps de fouet 11 relie ici le tuyau flexible 4, la tête 9 et/ou le corps 7. Ce câble est fixé à l'aide de crochets de sécurité 12 de telle sorte que seuls des personnes habilitées puissent le défaire par exemple en vue d'un démontage.

Ainsi, selon un mode de réalisation avantageux, le dispositif est relié à l'alimentation en fluide cryogénique par l'intermédiaire du conduit flexible fluidique 4. Ceci permet un démontage rapide. En effet, le conduit flexible 4 n'a pas à être démonté pour le nettoyage.

Suivant un mode de réalisation préférée, le nettoyage est encore facilité par le maintien du conduit flexible 4 sur le dispositif 3 par un système de maintien mécanique rapide du type raccord rapide afin d'aussi permettre le démontage du conduit flexible 4 dans les cas où cela s'avère finalement nécessaire.

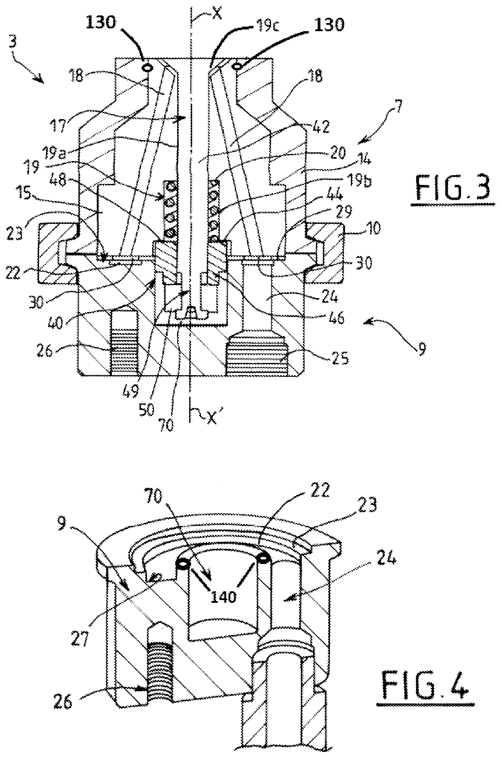

Comme illustré à la figure 3, ledit corps 7 est avantageusement creux et une soupape 17, forcée par un ressort 19, est insérée dans ledit corps 7. Ledit corps 7 comprend en outre un ou plusieurs canaux 18, dont deux sont visibles à la figure 3. Lesdits canaux 18 sont sensiblement parallèles à ladite soupape et sont destinés à être alimentés en fluide cryogénique sous pression, une extrémité amont desdits canaux 18 étant relié à ladite tête d'alimentation 9 en fluide cryogénique et une extrémité aval débouchant au niveau d'un siège de la soupape 17.

Le ressort 19 comprend une pluralité de spires. Il est taré de telle sorte que la soupape ne puisse pas coulisser sans être soumise à une pression du fluide cryogénique au moins égale à une pression seuil.

Ainsi dès que la pression de fluide cryogénique est inférieure à un seuil déterminé, la pression nécessaire pour faire coulisser la soupape 17 ne sera plus atteinte et la soupape 17 se repositionnera de façon étanche contre son siège.

Le choix du ressort et son tarage sont fonction du fluide cryogénique qui est utilisé. Ainsi pour de l'azote il doit pouvoir être taré typiquement entre 0 et 7 bars et pour le CO2 jusqu'à 25 bars.

Selon un mode de réalisation avantageux, le dispositif comprend n canaux 18 traversant, n'étant compris entre 1 et 20, leur nombre augmente lorsque la pression d'utilisation du fluide cryogénique diminue. Préférentiellement, lesdits canaux 18 forme un faisceau orienté de façon coaxiale à la soupape 17, selon l'axe longitudinal X-X', lesdits canaux étant régulièrement répartis angulairement autour dudit axe. Lesdits canaux sont, notamment, au nombre de trois au moins. Ici, ils sont au nombre de six. Une telle configuration est particulièrement adaptée à des applications azote. Cela étant, comme déjà dit, l'invention n'est pas limitée à de telles applications et elle trouvera aussi des applications pour du CO2. Dans un tel cas, le nombre de canaux 18 est avantageusement de deux, positionnés à 180° l'un de l'autre.

Le corps 7 est constitué, par exemple, de deux éléments, une pièce externe 14, creuse, dont une extrémité inférieure vient indirectement en appui sur la tête 9 et dont l'autre extrémité est destinée à être fixée sur la paroi de l'enceinte. A l'intérieur de cette pièce externe 14, est disposée une pièce interne 15 de forme complémentaire, également creuse, présentant en son centre une ouverture traversante accueillant la soupape 17. Ladite pièce interne 15 est aussi traversée par les canaux 18.

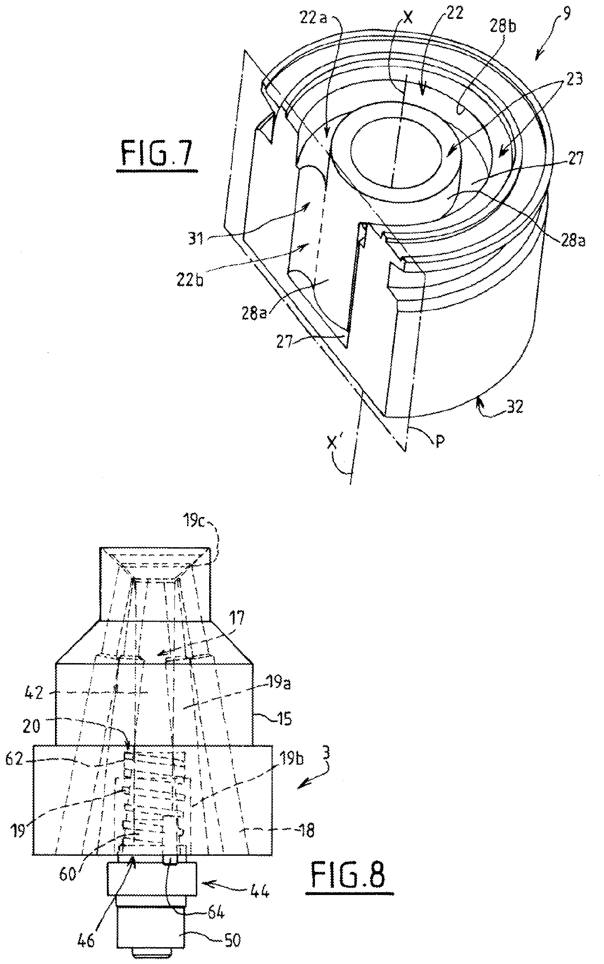

L'ouverture traversante centrale de la pièce interne 15 comprend trois zones, une zone centrale 19a de diamètre sensiblement égale à celui de la soupape de telle sorte que la soupape peut être placée en coulissement dans cette zone et une zone inférieure 19b de diamètre supérieur, de telle sorte qu'elle puisse recevoir autour de l'axe de la soupape le ressort 19 forçant celle-ci. Le ressort 19 est maintenu par un premier épaulement 20 formé entre les zones 19a et 19b. A l'extrémité opposée supérieure, la zone 19c est de forme biseautée, de diamètre plus large en son extrémité libre, la forme du biseau étant adaptée pour définir le siège de la soupape 17, lorsque la soupape 17 est forcée par le ressort. Une telle configuration est aussi visible dans le mode de réalisation de la figure 8.

On note sur la figure 3 la présence d'un joint torique 130, dont la présence est très avantageuse pour empêcher d'éventuelles entrées de produit alimentaire, et tout particulièrement de jus ou liquide, dans la buse, quand celle-ci est à l'arrêt, et notamment entre l'embase et le corps de la buse, c'est-à-dire entre la pièce externe 14 et la pièce interne 15 qui est munie des canaux 18 etc.....

Comme cela est mieux visible aux figures 4 à 7 et selon l'invention, ladite tête d'alimentation 9 comprend une gorge 22 de circulation du fluide alimentant ledit corps 7, plus particulièrement l'ensemble desdits canaux 18 dudit corps 7 dont l'extrémité amont débouche dans ladite gorge 22.

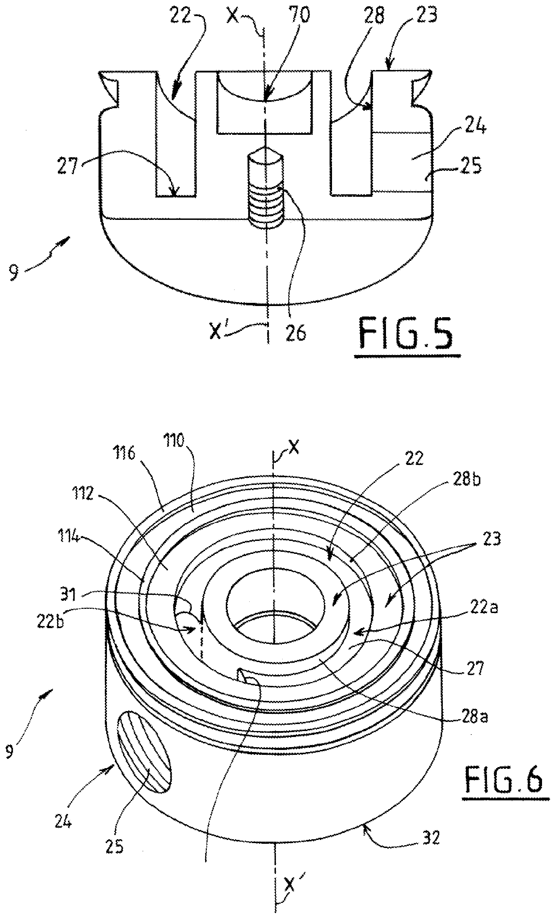

Si l'on se reporte de nouveau à la figure 3, on constate que ladite gorge est fermée en position montée du corps 7 sur la tête d'alimentation 9. A l'inverse, ladite gorge 22 est ouverte en position démontée de la tête d'alimentation 9 et du corps 7, une telle configuration correspondant à ce qui est illustré aux figures 4 et 5.

Il apparaît tout d'abord qu'une telle gorge permet d'établir une communication avec plusieurs canaux 18 du corps 7 sans que ces canaux soient seulement au nombre de deux, et plus particulièrement encore, sans que ces canaux ne soient diamétralement opposés. De plus, après démontage, la tête d'alimentation est particulièrement simple à nettoyer puisqu'une une partie essentielle de celle-ci, à savoir la partie formée par la gorge 22, est d'accès direct, ceci depuis la partie supérieure ouverte de la gorge.

Ladite tête d'alimentation 9 est avantageusement monobloc, c'est-à-dire constituée d'une seule pièce, ladite gorge 22 étant obtenue, par exemple, par usinage de ladite tête d'alimentation 9. On dispose de la sorte d'une solution d'une grande simplicité de mise en œuvre. En effet, sans avoir à démonter une tête d'alimentation 9 qui aurait été constitué de plusieurs pièces, on peut nettoyer la gorge 22 par sa partie supérieure ouverte.

Ladite tête d'alimentation 9 présente ici une face 23 au niveau de laquelle ladite gorge 22 débouche en position démontée de la tête d'alimentation 9 et du corps 7, ladite face 23 étant orientée orthogonalement à l'axe d'extension longitudinale X-X'.

Ladite gorge 22 est, par exemple, annulaire et s'étend angulairement autour de l'axe longitudinale X-X'. Elle est coaxiale avec la soupape 17.

Selon le mode de réalisation des figures 3 à 5, ladite gorge présente avantageusement une profondeur, c'est-à-dire une dimension selon l'axe longitudinale X-X', sensiblement constante. Elle présente ici une section en U.

Ladite tête d'alimentation 9 comprend un conduit 24 de circulation du fluide destiné à distribuer le fluide dans ladite gorge 22. Ledit conduit 24 présente à son extrémité opposée à celle débouchant dans la gorge 22 un taraudage 25 permettant la fixation du raccord rapide évoqué plus haut. Ladite d'alimentation 9 comprend en outre ici un alésage 26, éventuellement taraudé.

Dans le mode de réalisation des figures 3 et 4, ledit conduit 24 débouche sur une paroi de fond 27 de la gorge 22. Dans ce mode, ladite gorge présente une faible profondeur, à savoir une profondeur inférieure au quart d'une extension de ladite tête d'alimentation selon ladite direction longitudinale X-X'.

Comme illustré à la figure 5, dans un autre mode de réalisation, ladite gorge 22 présente une section de passage du fluide supérieure à la section de passage du fluide dans le corps, c'est-à-dire, à la section cumulée des canaux 18 du corps 7. On évite de la sorte un effet de détente de fluide en amont des orifices de sortie des canaux 18.

Ladite gorge présente ici une profondeur supérieure au trois quart de l'extension de ladite tête d'alimentation 9 selon ladite direction longitudinale X-X'. Dans ce mode de réalisation, ledit conduit 24 débouche sur une paroi latérale 28 de la gorge 22.

Et l'on a fait figurer sur la figure 4 (et uniquement sur la figure 4 pour des raisons de bonne visibilité), la présence avantageuse d'un joint 140, situé sur la marche qui fait face à la marche 23 de l'autre côté de la rainure ou gorge, présence tout particulièrement avantageuse pour limiter les risques d'entrée de poussière au niveau de la gorge 22.

Comme illustré aux figures 6 et 7, selon un autre mode de réalisation, une première partie 22a de ladite gorge 22 présente une profondeur réduite et une seconde partie présente une profondeur plus importante, formant une cavité 22b. Autrement dit, le fond 27 de la gorge se situe à deux niveaux différents. Le fond 27 de la gorge est situé relativement proche de la surface 23 au niveau de laquelle ladite gorge 22 débouche dans la partie 22a où la gorge est de plus faible profondeur et relativement proche d'une surface de base 32 de ladite tête d'alimentation 9, au niveau de ladite cavité 22b, ladite surface de base 32 étant opposée à ladite surface 23 selon l'axe longitudinale XX' du dispositif. La profondeur de la première partie 22a de la gorge est, par exemple, deux à dix fois plus faible que la profondeur de la cavité 22b, ladite profondeur étant mesurée à chaque fois depuis ladite surface 23 au niveau de laquelle ladite gorge 22 débouche jusqu'à la partie respective du fond 27.

La cavité 22b est plus visible à la figure 7 où elle est coupée par le plan de coupe P. Ladite cavité présente une section transversale sensiblement en forme de portion angulaire d'anneau. Ici, dans chacune de ses premières et secondes parties 22a, 22b, le fond 27 de la gorge 22 est plat. Les bords 31 d'extrémité angulaire de la cavité 22b sont, par exemple, arrondis. En variante, ils pourront être orientés radialement.

Ladite première partie 22a de la gorge et ladite seconde partie 22b de la gorge sont complémentaires et forment l'intégralité de la gorge 22. La première partie 22a de la gorge 22 comme la cavité 22b présente une paroi latérale interne 28a en continuité l'une de l'autre et formant un cylindre, de plus grande dimension axiale au niveau de la cavité 22b. De même, la première partie 22a de la gorge 22 comme la cavité 22b présente une paroi latérale externe 28b en continuité l'une de l'autre et formant un cylindre, de plus grande dimension axiale au niveau de la cavité 22b, cette partie de plus grande dimension étant cachée sur les figures. Ladite seconde partie 22b de la gorge 22 présente une étendue angulaire comprise, notamment, entre 30° et 90°.

Selon ce mode de réalisation, ledit conduit 24 (visible figure 6) débouche sur la paroi latérale externe de la gorge 22, notamment au niveau de ladite cavité 22b, ici sensiblement en son milieu, selon l'étendue angulaire de ladite cavité 22b. Ledit conduit 24 est, par exemple, orienté radialement.

Selon une autre variante, non illustré, ladite gorge 22 est de faible profondeur, comme dans le mode de réalisation des figures 3 et 4 et ledit conduit 24 est orienté radialement, comme dans le mode de réalisation de la figure 5. Cependant, contrairement au mode de réalisation de la figure 5, ledit conduit 24 comprend un prolongement s'étendant radialement sous la gorge 22, sans la croiser puisque celle-ci est de faible profondeur, et sous la cavité 60, l'alésage 26 ayant été supprimé pour laisser passer ledit prolongement. Pour établir, une connexion fluidique entre ladite gorge 22 et le prolongement du conduit 24, deux alésages, orientés parallèlement à l'axe longitudinale XX', sont prévus dans ladite tête d'alimentation 9 depuis le fond de ladite gorge 22 jusqu'au dit prolongement. Ils sont situés symétriquement par rapport audit axe longitudinal XX'.

Si l'on se reporte de nouveau à la figure 3, on constate que, préférentiellement, ledit dispositif comprend un joint 29 fermant ladite gorge 22, en prenant appui sur la surface 23, ladite surface 23 formant un épaulement périphérique en liaison avec un bord supérieur de la tête d'alimentation 9. Ledit joint 29 est pris en sandwich entre ladite tête 9 et ledit corps 7. Ledit joint 29 présente des orifices 30, chacun des orifices 30 étant situé en vis-à-vis de l'un des canaux 18 du corps 7. Lesdits orifices 30 permettent de la sorte le passage du fluide de ladite gorge 22 vers lesdits canaux 18 du corps 7 tout en assurant une étanchéité entre ladite tête d'alimentation 9 et ledit corps 7. Un joint de même type est utilisé dans les modes de réalisation des figures 5 à 7.

Selon un autre aspect de l'invention, ledit dispositif comprend une butée 40, montée sur une tige 42 de la soupape, ledit ressort 19 prenant appui sur ladite butée 40.

Ladite butée 40 et ledit ressort 19 sont configurés pour que la butée 40 vienne en contact avec un second épaulement 44 du corps 7, avant mise en contact des spires du ressort 19 les unes contre les autres lors d'un actionnement de la soupape 17. On améliore de la sorte la maîtrise de la course de la soupape 17 qui ne dépend plus du ressort lui-même et de ses éventuelles dispersions de fabrication. Le contrôle du débit de fluide distribué dans l'enceinte est de la sorte optimisé.

Ladite butée 40 comprend préférentiellement une première pièce 46, destinée à être standard, et une deuxième pièce 48, destinée à être spécifique à chaque application. En particulier, l'épaisseur de la première pièce 46, c'est-à-dire la dimension de la première pièce 46 selon l'axe X-X', est constante d'un dispositif à l'autre tandis que l'épaisseur de la seconde pièce 48 pourra être adaptée d'une application à l'autre de façon à prendre en compte, notamment, les variations de pression à l'intérieur de l'enceinte.

Ici, ladite tige 42 comprend une portion 49 de diamètre réduit et ladite butée comprend un anneau de montage 50. Ladite tige 42 et ledit anneau de montage 50 sont mutuellement configurés pour permettre un encliquetage dudit anneau 50 sur ladite tige 42 au niveau de ladite portion de diamètre réduit 49 de façon à positionner axialement lesdites première 44 et/ou seconde pièces 46 de la butée le long de ladite tige 42. Lesdites première et seconde pièces 44, 46 présentent un alésage centrale de diamètre sensiblement identique à celui du diamètre de la tige 42 de sorte à pouvoir être emmanché dessus depuis une extrémité proximale de ladite tige 42, opposée à l'extrémité portant la tête de la soupape 17. Ladite tige 42 forme un épaulement pour l'anneau de montage 50 à la liaison entre la portion de diamètre réduit 49 et ladite extrémité distale. Ledit anneau de montage 50 est avantageusement de configuration symétrique de manière à pouvoir être monté dans un sens comme dans l'autre sur la tige 42 de la soupape. Ledit anneau de montage 50 ainsi que les première et secondes pièces 44, 46 de la butée présentent ici une configuration de révolution autour de l'axe XX'.

Comme illustré à la figure 8, selon une variante de réalisation illustrant un autre aspect de l'invention, ledit dispositif comprend en outre des moyens de centrage du ressort 19 de manière à tenir ledit ressort radialement à distance de la soupape 17. Autrement dit, grâce auxdits moyens de centrage, il y a un jeu radial suffisamment grand pour éviter le contact entre la tige 42 de la soupape et les spires du ressort 19. On évite la sorte une abrasion de ces pièces par frottement l'une contre l'autre.

Ici, lesdits moyens de centrage comprennent un doigt de centrage 60 d'une première extrémité du ressort 19. La ou les spires de la première extrémité du ressort 19 sont ajustées sur ledit doigt de centrage 60. Autrement dit, un diamètre dudit doigt de centrage 60 et un diamètre interne des spires du ressort 19 correspondent de sorte à permettre un emmanchage du ressort 19 sur le doigt de centrage 60 avec un très léger jeu.

Ledit doigt de centrage 60 est monté sur ladite soupape 19, notamment sur la tige 42 de la soupape. Ledit doigt centrage 60 et ladite butée 40, en particulier la pièce 46 spécifique à chaque application de ladite butée 40, forment une seule et même pièce. Ledit doigt de centrage présente ici une configuration de révolution autour de l'axe XX'.

Lesdits moyens de centrage comprennent encore ici une cheminée de guidage 62 d'une seconde extrémité du ressort 19, opposée à la première extrémité. La ou les spires de la seconde extrémité du ressort 19 sont ajustées dans ladite cheminée 62. Autrement dit, un diamètre de ladite cheminée 62 et un diamètre externe des spires du ressort 19 correspondent de sorte à permettre un emmanchage du ressort 19 dans la cheminée 62 avec un très léger jeu. Ladite cheminée de guidage 62 est formée dans ledit corps, par exemple, au niveau d'une partie haute de la zone inférieure 19b.

A la figure 8, on voit encore un pion de guidage 64 dudit dispositif. Il permet de positionner ladite tête d'alimentation 9 sur ledit corps 7.

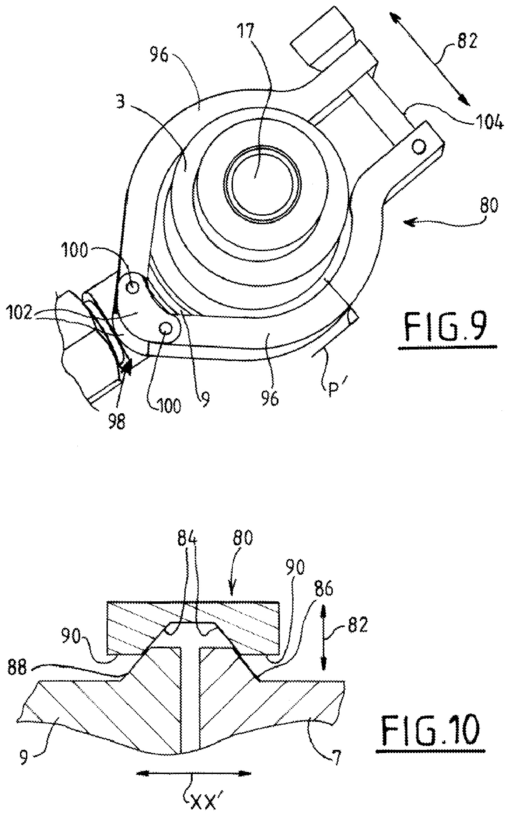

Comme illustré aux figures 9 et 10, selon une variante de fixation de ladite tête d'alimentation 9 sur ledit corps 7 et d'après un autre aspect de l'invention, ledit dispositif comprend une bride d'assemblage 80 du corps 7 et de la tête de distribution 9, ledit dispositif étant configuré pour transformer un mouvement de serrage radiale de ladite bride 80, par rapport à l'axe d'extension longitudinale XX' dudit dispositif, mouvement de serrage ici illustré par la flèche 82 à la figure 10, en un mouvement de serrage de la tête 9 et du corps 7 l'un contre l'autre selon ledit axe d'extension longitudinale XX'.

Pour cela, ici, ladite bride 80 ainsi que ledit corps 7 et/ou ladite tête 9 présentent une surface inclinée 84, 86, 88 par rapport audit axe longitudinale, lesdites surfaces inclinées étant destinées à coopérer l'une avec l'autre lors du serrage de la bride 80. On réalise de la sorte un contact du type cône contre cône grâce auquel le serrage radial de la bride 80 permet de rapprocher la tête 9 du corps 7.

La bride 80 comprend en outre une ou des butée 90, situées au niveau d'une extrémité distale de la surface inclinée 84 de ladite bride. La ou lesdites butées 90 de la bride sont définies par une surface annulaire distale de ladite bride 80. Avantageusement, la configuration des surfaces inclinées 84, 86, 88 permet d'améliorer l'étanchéité du dispositif en assurant un serrage de la tête 9 contre le corps 7 avant que la bride ne vienne en butée radiale contre le corps 7 et/ou la tête. Autrement dit, la ou lesdites butées 90 de la bride sont configurées pour rester à distance d'une ou de dites parties, ici prévues cylindriques, du corps 7 et/ou de la tête 9, situées au voisinage des surfaces inclinées 86, 88, dudit corps 7 et/ou de ladite tête 9, respectivement, après serrage.

Si l'on se reporte à la figure 9, on constate que ladite bride 80 présente, par exemple, une configuration de pince. Elle comprend deux bras 96, sensiblement en forme de C, articulés l'un par rapport à l'autre. Lesdits bras 96 enserrent radialement ledit corps 7 et ladite tête 9, au niveau de leur zone de liaison. Lesdits bras 96 sont articulés, par exemple, au niveau d'un pivot 98. Ledit pivot 98 comprend ici un axe d'articulation 100 pour chaque bras 96. Lesdits axes d'articulation 100 sont reliés par des platines 102. Ils sont situés à une extrémité desdits bras 96. A l'extrémité diamétralement opposé desdits bras 96 une vis 104 dudit dispositif permet de rapprocher les bras 96 l'un contre l'autre selon ladite direction de serrage radiale 82 de la bride 80.

En complément ou alternativement, pour améliorer l'étanchéité du dispositif conforme à l'invention, ledit dispositif comprend un joint périphérique, non illustré, entre ladite tête d'alimentation 9 et ledit corps 7. Si l'on se reporte de nouveau à la figure 6, on voit que ladite tête d'alimentation 9 comprend en ce sens, dans ce mode de réalisation, un logement périphérique 110 pour ledit joint périphérique. Ledit joint périphérique est situé ici au-delà du joint fermant la gorge 22, ledit joint fermant la gorge 22 étant non illustré à cette figure mais destiné à prendre appui, au niveau de sa périphérie externe, sur une portée 112 de la face 23 au niveau de laquelle ladite gorge 22 débouche.

Ledit logement périphérique 110 est ici situé entre une rainure périphérique interne 114 et une rainure périphérique externe 116 de ladite tête d'alimentation 7. Ladite rainure périphérique interne 114 délimite extérieurement le logement pour le joint fermant la gorge 22. Lesdites rainures périphériques interne 114 et externe 116 sont concentriques.

Ladite tête d'alimentation 9 présente en outre un puit 70 de déplacement de la soupape 17. Ledit puit 70 et ladite gorge 22 sont positionnés de façon concentrique. Le puit 70 est dans le prolongement de l'ouverture 19b du corps 7, la butée 40 étant mobile dans le volume formé par ledit puit 70 et l'ouverture 19b lors de l'actionnement de la soupape 17.

De façon avantageuse, les différents éléments constitutifs du dispositif sont réalisés en acier, de préférence en acier inox.

En fonctionnement, la vanne 6 est ouverte, et le fluide cryogénique est envoyé par les tuyaux 5 puis le flexible 4 dans l'intérieur du dispositif 3, à travers la tête 9, en passant par le conduit 24 et la gorge 22, puis il pénètre dans chacun des canaux 18 du corps 7. Le fluide sous pression exerce alors une pression sur le siège de la soupape, un espace est alors formé entre la partie 19c et le siège de la soupape. Le solide commence à se former dans cet espace par les effets de pression et de température et il est forcé à l'intérieur de l'enceinte. Lorsqu'il est nécessaire d'arrêter l'alimentation en fluide cryogénique, la vanne 6 est fermée.

On a signalé plus haut les risques de voir, lorsque la buse est à l'arrêt, des liquides entrer dans la structure de la buse. En effet on peut considérer que lorsque la buse est en opération, les produits traités ne sont pas liquides (par exemple de la viande hachée), les produits sont refroidis donc visqueux, et par ailleurs du fait de la présence du fluide cryogénique, on a une surpression à l'intérieur de la buse, donc les produits sont repoussés.

En revanche, à l'arrêt, il y a donc un risque, selon les produits traités, de voir des liquides s'introduire dans la buse.

Ce peut être le cas comme on l'a dit entre l'embase et le corps de la buse, c'est-à-dire entre la pièce externe 14 et la pièce interne 15, ce peut être également le cas dans les canaux 18 et dans l'inter-espace cylindrique entourant la tige 42 de la soupape.

Selon un mode avantageux de mise en oeuvre de l'invention on propose donc de balayer la buse lorsque celle-ci est à l'arrêt à l'aide d'air comprimé (ou de tout autre gaz de balayage convenant à cette industrie), par exemple à l'aide de l'installation 120 représentée en figure 1.

## Revendications

1. Dispositif (3) d'injection d'un fluide, notamment cryogénique, le dispositif comprenant une tête d'alimentation (9) en fluide et un corps de distribution (7) du fluide, monté de façon détachable sur ladite tête d'alimentation (9), ladite tête d'alimentation (9) comprenant une gorge (22) de circulation du fluide, alimentant ledit corps (7), ladite gorge (22) étant fermée en position montée du corps (7) sur la tête d'alimentation (9) et ladite gorge (22) étant ouverte en position démontée de la tête d'alimentation (9) et du corps (7), **se caractérisant en ce que** le dispositif comprend une soupape (17) forcée par un ressort (19) contre ledit corps (7).

2. Dispositif (3) selon la revendication 1 dans lequel ledit corps (7) présente un ou plusieurs canaux (18) de circulation du fluide, définissant en combinaison une section de passage du fluide dans le corps, ladite gorge (22) présentant une section de passage du fluide supérieure à la section de passage du fluide dans le corps (7).

3. Dispositif (3) selon la revendication précédente dans lequel lesdits canaux (18) sont au nombre de trois au moins.

4. Dispositif (3) selon l'une quelconque des revendications précédentes dans lequel ladite gorge (22) présente une profondeur sensiblement constante.

5. Dispositif (3) selon l'une quelconque des revendications précédentes dans lequel ladite gorge (22) présente une section en U.

6. Dispositif (3) selon l'une quelconque des revendications précédentes dans lequel ladite gorge (22) est annulaire.

7. Dispositif (3) selon l'une quelconque des revendications précédentes, à l'exception de la revendication 4, dans lequel une première partie (22a) de ladite gorge (22) présente une profondeur réduite et une seconde partie (22b) présente une profondeur plus importante.

8. Dispositif (3) selon l'une quelconque des revendications précédentes dans lequel ladite tête d'alimentation (9) comprend un conduit (24) de circulation du fluide, ledit conduit (24) débouchant sur une paroi latérale (28) de la gorge (22).

9. Dispositif (3) selon l'une quelconque des revendications précédentes dans lequel ladite tête (9) présente une face (23) au niveau de laquelle ladite gorge (22) débouche en position démontée de la tête d'alimentation (9) et du corps (7), ladite tête (9) s'étendant selon une direction longitudinale orthogonale à ladite face (23).

10. Dispositif (3) selon la revendication précédente dans lequel ladite gorge (22) présente une profondeur supérieure au trois quart d'une extension de ladite tête d'alimentation (9) selon ladite direction longitudinale.

11. Dispositif (3) selon l'une quelconque des revendications précédentes dans lequel ledit dispositif comprend un joint (29) fermant ladite gorge (22).

12. Dispositif (3) selon la revendication 11, dans lequel ledit joint (29) présente des orifices (30) débouchant dans ledit corps (7).

13. Dispositif (3) selon l'une quelconque des revendications précédentes dans lequel ledit dispositif comprend en outre une butée (40), montée sur une tige (42) de la soupape, ledit ressort (19) prenant appui sur ladite butée (40), ledit ressort (19) comprenant une pluralité de spires, ladite butée (40) et ledit ressort (19) étant configurés pour que la butée (40) vienne en contact avec le corps (7) avant mise en contact des spires du ressort (19) les unes contre les autres lors d'un actionnement de la soupape (17).

14. Dispositif (3) selon la revendication précédente dans lequel ladite butée (40) comprend un première pièce (46), destinée à être standard, et une deuxième pièce (48), destinée à être spécifique à chaque application.

15. Dispositif (3) selon la revendication précédente dans lequel ladite tige (42) comprend une portion (49) de diamètre réduit et ladite butée (40) comprend un anneau de montage (50), ladite tige (42) et ledit anneau de montage (50) étant mutuellement configurés pour permettre un encliquetage dudit anneau (50) sur ladite tige (42) au niveau de ladite portion de diamètre réduit (49) de façon à positionner axialement lesdites premières et/ou seconde pièces (46, 48) de la butée (40) le long de ladite tige (42).

16. Dispositif (3) selon l'une quelconque des revendications précédentes, dans lequel ledit dispositif comprend des moyens de centrage du ressort de manière à tenir ledit ressort (19) radialement à distance de la soupape (17).

17. Dispositif (3) selon la revendication précédente dans lequel lesdits moyens de centrage comprennent un doigt de centrage (60) d'une première extrémité du ressort (19), ledit doigt de centrage étant monté sur ladite soupape (17).

18. Dispositif (3) selon la revendication précédente dans lequel lesdits moyens de centrage comprennent une cheminée de guidage (62) d'une seconde extrémité du ressort (19), ladite cheminée de guidage (62) étant formé dans ledit corps (7).

19. Dispositif (3) selon l'une quelconque des revendications précédentes dans lequel ledit dispositif comprend une bride d'assemblage (80) du corps (7) et de la tête de distribution (9), ledit dispositif étant configuré pour transformer un mouvement de serrage transversale de ladite bride (80), par rapport à un axe d'extension longitudinale (XX') dudit dispositif, en un mouvement de serrage de la tête (9) et du corps (7) l'un contre l'autre selon ledit axe d'extension longitudinale (XX').

20. Dispositif (3) selon la revendication précédente dans lequel ladite bride (80) ainsi que ladite tête (9) et/ou ledit corps (7) présentent une surface inclinée (84, 86, 88) par rapport audit axe longitudinale (XX'), lesdites surfaces inclinées (84, 86, 88) étant destinées à coopérer l'une avec l'autre lors du serrage de la bride (80).

21. Installation de refroidissement de produits alimentaires, comprenant un récipient (1) permettant de contenir un produit à refroidir en vrac, et comprenant au moins un dispositif (3) d'injection d'un fluide cryogénique dans le récipient, dispositif d'injection destiné à être fixé sur la partie inférieure du récipient, **se caractérisant en ce que** ledit au moins un dispositif comporte :
- une tête d'alimentation (9) en fluide et un corps de distribution (7) du fluide, monté de façon détachable sur ladite tête d'alimentation (9), ladite tête d'alimentation (9) comprenant une gorge (22) de circulation du fluide, alimentant ledit corps (7), ladite gorge (22) étant fermée en position montée du corps (7) sur la tête d'alimentation (9) et ladite gorge (22) étant ouverte en position démontée de la tête d'alimentation (9) et du corps (7).

22. Installation selon la revendication 21, **se caractérisant en ce que** ledit au moins un dispositif comprend une soupape (17) forcée par un ressort (19) contre ledit corps (7).

23. Installation selon la revendication 21 ou 22, **se caractérisant en ce qu'**elle comprend une installation (120) d'alimentation du ou de chacun des dispositifs d'injection en un gaz de balayage, par exemple en air comprimé, permettant l'alimentation en gaz du ou de chacun des dispositifs d'injection lorsque l'installation de refroidissement est à l'arrêt.

24. Installation selon la revendication 23, **se caractérisant en ce que** l'installation (120) d'alimentation du ou de chacun des dispositifs d'injection en un gaz de balayage, comprend une ou des lignes d'alimentation en gaz de balayage de chacun des dispositifs d'injection, la ou chacune des lignes étant munie d'un clapet anti-retour suivi d'un système de type « queue de cochon ».

## Patentansprüche

1. Vorrichtung (3) zur Injektion einer Flüssigkeit, insbesondere einer kryogenen Flüssigkeit, wobei die Vorrichtung einen Flüssigkeitszuführkopf (9) und einen Körper zur Verteilung (7) der Flüssigkeit beinhaltet, welcher abnehmbar an dem Zuführkopf (9) montiert ist, wobei der Zuführkopf (9) eine Rinne (22) zur Zirkulation der Flüssigkeit beinhaltet, die den Körper (7) versorgt, wobei die Rinne (22), wenn der Körper (7) an dem Zuführkopf (9) montiert ist, geschlossen ist und wobei die Rinne (22), wenn der Zuführkopf (9) und der Körper (7) demontiert sind, geöffnet ist, **dadurch gekennzeichnet, dass** die Vorrichtung ein Ventil (17) beinhaltet, das durch eine Feder (19) gegen den Körper (7) gedrückt wird.

2. Vorrichtung (3) nach Anspruch 1, wobei der Körper (7) einen oder mehrere Kanäle (18) zur Zirkulation der Flüssigkeit aufweist, die gemeinsam einen Durchflussquerschnitt der Flüssigkeit in dem Körper definieren, wobei die Rinne (22) einen Durchflussquerschnitt der Flüssigkeit aufweist, der größer als der Durchflussquerschnitt der Flüssigkeit in dem Körper (7) ist.

3. Vorrichtung (3) nach dem vorhergehenden Anspruch, wobei die Anzahl der Kanäle (18) mindestens drei beträgt.

4. Vorrichtung (3) nach einem beliebigen der vorhergehenden Ansprüche, wobei die Rinne (22) eine im Wesentlichen konstante Tiefe aufweist.

5. Vorrichtung (3) nach einem beliebigen der vorhergehenden Ansprüche, wobei die Rinne (22) einen U-förmigen Querschnitt aufweist.

6. Vorrichtung (3) nach einem beliebigen der vorhergehenden Ansprüche, wobei die Rinne (22) ringförmig ist.

7. Vorrichtung (3) nach einem beliebigen der vorhergehenden Ansprüche, mit Ausnahme von Anspruch 4, wobei ein erster Teil (22a) der Rinne (22) eine reduzierte Tiefe aufweist und ein zweiter Teil (22b) eine größere Tiefe aufweist.

8. Vorrichtung (3) nach einem beliebigen der vorhergehenden Ansprüche, wobei der Zuführkopf (9) eine Zuleitung (24) zur Zirkulation der Flüssigkeit beinhaltet, wobei die Zuleitung (24) an einer Seitenwand (28) der Rinne (22) mündet.

9. Vorrichtung (3) nach einem beliebigen der vorhergehenden Ansprüche, wobei der Kopf (9) eine Fläche (23) aufweist, an der die Rinne (22), wenn der Zuführkopf (9) und der Körper (7) demontiert sind, mündet, wobei sich der Kopf (9) in einer zu der Fläche (23) orthogonalen Längsrichtung erstreckt.

10. Vorrichtung (3) nach dem vorhergehenden Anspruch, wobei die Rinne (22) eine Tiefe aufweist, die mehr als drei Viertel einer Erstreckung des Zuführkopfes (9) in der Längsrichtung beträgt.

11. Vorrichtung (3) nach einem beliebigen der vorhergehenden Ansprüche, wobei die Vorrichtung eine Dichtung (29) beinhaltet, die die Rinne (22) schließt.

12. Vorrichtung (3) nach Anspruch 11, wobei die Dichtung (29) Öffnungen (30) aufweist, die in den Körper (7) münden.

13. Vorrichtung (3) nach einem beliebigen der vorhergehenden Ansprüche, wobei die Vorrichtung ferner einen Anschlag (40) beinhaltet, der an einem Schaft (42) des Ventils montiert ist, wobei die Feder (19) auf dem Anschlag (40) aufliegt, wobei die Feder (19) eine Vielzahl von Windungen beinhaltet, wobei der Anschlag (40) und die Feder (19) dazu konfiguriert sind, dass bei einer Betätigung des Ventils (17) der Anschlag (40) mit dem Körper (7) in Kontakt kommt, bevor die Windungen der Feder (19) miteinander in Kontakt kommen.

14. Vorrichtung (3) nach dem vorhergehenden Anspruch, wobei der Anschlag (40) ein erstes Element (46), das dazu bestimmt ist, einem Standardelement zu entsprechen, und ein zweites Element (48), das dazu bestimmt ist, für jede Anwendung spezifisch zu sein, beinhaltet.

15. Vorrichtung (3) nach dem vorhergehenden Anspruch, wobei der Schaft (42) einen Abschnitt (49) mit reduziertem Durchmesser beinhaltet und der Anschlag (40) einen Montagering (50) beinhaltet, wobei der Schaft (42) und der Montagering (50) gegenseitig dazu konfiguriert sind, ein Einrasten des Rings (50) auf dem Schaft (42) im Bereich des Abschnitts mit reduziertem Durchmesser (49) zu ermöglichen, um das erste und/oder das zweite Element (46, 48) des Anschlags (40) axial entlang des Schafts (42) zu positionieren.

16. Vorrichtung (3) nach einem beliebigen der vorhergehenden Ansprüche, wobei die Vorrichtung Mittel zum Zentrieren der Feder beinhaltet, um die Feder (19) zu dem Ventil (17) radial auf Abstand zu halten.

17. Vorrichtung (3) nach dem vorhergehenden Anspruch, wobei die Zentriermittel einen Finger (60) zum Zentrieren eines ersten Endes der Feder (19) beinhalten, wobei der Zentrierfinger an dem Ventil (17) montiert ist.

18. Vorrichtung (3) nach dem vorhergehenden Anspruch, wobei die Zentriermittel einen Schacht (62) zur Führung eines zweiten Endes der Feder (19) beinhalten, wobei der Führungsschacht (62) in dem Körper (7) gebildet ist.

19. Vorrichtung (3) nach einem beliebigen der vorhergehenden Ansprüche, wobei die Vorrichtung einen Flansch (80) für den Zusammenbau des Körpers (7) und des Verteilerkopfes (9) beinhaltet, wobei die Vorrichtung dazu konfiguriert ist, eine in Bezug auf eine Längserstreckungsachse (XX') der Vorrichtung transversale Spannbewegung des Flansches (80) in eine Spannbewegung des Kopfes (9) gegen den Körper (7) gemäß der Längserstreckungsachse (XX') umzuwandeln.

20. Vorrichtung (3) nach dem vorhergehenden Anspruch, wobei der Flansch (80) sowie der Kopf (9) und/oder der Körper (7) eine in Bezug auf die Längsachse (XX') geneigte Oberfläche (84, 86, 88) aufweisen, wobei die geneigten Oberflächen (84, 86, 88) dazu bestimmt sind, beim Spannen des Flansches (80) zusammenzuwirken.

21. Anlage zur Kühlung von Lebensmitteln, die einen Behälter (1) beinhaltet, der die Aufnahme eines zu kühlenden Schüttguts ermöglicht, und mindestens eine Vorrichtung (3) zur Injektion einer kryogenen Flüssigkeit in den Behälter beinhaltet, wobei die Injektionsvorrichtung dazu bestimmt ist, an dem unteren Teil des Behälters befestigt zu werden, **dadurch gekennzeichnet, dass** die mindestens eine Vorrichtung Folgendes umfasst:
- einen Flüssigkeitszuführkopf (9) und einen Körper zur Verteilung (7) der Flüssigkeit, welcher abnehmbar an dem Zuführkopf (9) montiert ist, wobei der Zuführkopf (9) eine Rinne (22) zur Zirkulation der Flüssigkeit beinhaltet, die den Körper (7) versorgt, wobei die Rinne (22), wenn der Körper (7) an dem Zuführkopf (9) montiert ist, geschlossen ist und wobei die Rinne (22), wenn der Zuführkopf (9) und der Körper (7) demontiert sind, geöffnet ist.

22. Anlage nach Anspruch 21, **dadurch gekennzeichnet, dass** die mindestens eine Vorrichtung ein Ventil (17) beinhaltet, das durch eine Feder (19) gegen den Körper (7) gedrückt wird.

23. Anlage nach Anspruch 21 oder 22, **dadurch gekennzeichnet, dass** sie eine Anlage (120) zur Zuführung eines Spülgases, beispielsweise Druckluft, zu der oder zu jeder der Injektionsvorrichtungen beinhaltet, sodass es bei einem Stillstand der Kühlanlage möglich ist, der oder jeder der Injektionsvorrichtungen ein Gas zuzuführen.

24. Anlage nach Anspruch 23, **dadurch gekennzeichnet, dass** die Anlage (120) zur Zuführung eines Spülgases zu der oder zu jeder der Injektionsvorrichtungen eine oder mehrere Leitungen zur Zuführung eines Spülgases zu jeder der Injektionsvorrichtungen beinhaltet, wobei die oder jede der Leitungen über ein Rückschlagventil verfügt, an das ein System vom Typ Kreisform anschließt.

## Claims

1. Device (3) for injecting a fluid, in particular a cryogenic fluid, the device comprising a fluid feed head (9) and a fluid dispensing body (7) mounted in a detachable manner on said feed head (9), said feed head (9) comprising a fluid flow groove (22), feeding said body (7), said groove (22) being closed in the mounted position of the body (7) on the feed head (9) and said groove (22) being open in the separated position of the feed head (9) and the body (7), **characterized in that** the device comprises a delivery valve (17) that is forced against said body (7) by a spring (19).

2. Device (3) according to Claim 1, wherein said body (7) has one or more fluid flow channels (18) that together define a flow cross section for the fluid in the body, said groove (22) having a flow cross section for the fluid that is greater than the flow cross section for the fluid in the body (7).

3. Device (3) according to the preceding claim, wherein there are at least three of said channels (18).

4. Device (3) according to any one of the preceding claims, wherein said groove (22) has a substantially constant depth.

5. Device (3) according to any one of the preceding claims, wherein said groove (22) has a U-shaped cross section.

6. Device (3) according to any one of the preceding claims, wherein said groove (22) is annular.

7. Device (3) according to any one of the preceding claims, apart from Claim 4, wherein a first part (22a) of said groove (22) has a reduced depth and a second part (22b) has a greater depth.

8. Device (3) according to any one of the preceding claims, wherein said feed head (9) comprises a fluid flow duct (24), said duct (24) opening out at a side wall (28) of the groove (22).

9. Device (3) according to any one of the preceding claims, wherein said head (9) has a face (23) at which said groove (22) opens out in the separated position of the feed head (9) and the body (7), said head (9) extending in a longitudinal direction orthogonal to said face (23).

10. Device (3) according to the preceding claim, wherein said groove (22) has a depth greater than three quarters of an extension of said feed head (9) in said longitudinal direction.

11. Device (3) according to any one of the preceding claims, wherein said device comprises a seal (29) closing said groove (22).

12. Device (3) according to Claim 11, wherein said seal (29) has orifices (30) that open into said body (7).

13. Device (3) according to any one of the preceding claims, wherein said device also comprises a stop (40), mounted on a stem (42) of the delivery valve, said spring (19) bearing against said stop (40), said spring (19) comprising a plurality of turns, said stop (40) and said spring (19) being configured such that the stop (40) comes into contact with the body (7) before the turns of the spring (19) are brought into contact with one another during actuation of the delivery valve (17).

14. Device (3) according to the preceding claim, wherein said stop (40) comprises a first part (46), intended to be standard, and a second part (48), intended to be specific to each application.

15. Device (3) according to the preceding claim, wherein said stem (42) comprises a portion (49) of reduced diameter and said stop (40) comprises a mounting ring (50), said stem (42) and said mounting ring (50) being mutually configured so as to allow said ring (50) to be snap-fastened on said stem (42) at said portion of reduced diameter (49) in order to axially position said first and/or second parts (46, 48) of the stop (40) along said stem (42).

16. Device (3) according to any one of the preceding claims, wherein said device comprises means for centring the spring so as to keep said spring (19) radially at a distance from the delivery valve (17).

17. Device (3) according to the preceding claim, wherein said centring means comprise a centring finger (60) for centring a first end of the spring (19), said centring finger being mounted on said delivery valve (17).

18. Device (3) according to the preceding claim, wherein said centring means comprise a guide tube (62) for guiding a second end of the spring (19), said guide tube (62) being formed in said body (7).

19. Device (3) according to any one of the preceding claims, wherein said device comprises an assembly clamp (80) for assembling the body (7) and the dispensing head (9), said device being configured to convert a transverse clamping movement of said clamp (80), with respect to a longitudinal axis of extension (XX') of said device, into a movement clamping the head (9) and the body (7) together along said longitudinal axis of extension (XX').

20. Device (3) according to the preceding claim, wherein said clamp (80) and said head (9) and/or said body (7) have an inclined surface (84, 86, 88) with respect to said longitudinal axis (XX'), said inclined surfaces (84, 86, 88) being intended to cooperate with one another during the clamping of the clamp (80).

21. Installation for cooling food products, comprising a container (1) for containing a product to be cooled in a loose form, and comprising at least one device (3) for injecting a cryogenic fluid into the container, said injection device being intended to be fastened to the lower part of the container, **characterized in that** said at least one device has:
- a fluid feed head (9) and a fluid dispensing body (7) mounted in a detachable manner on said feed head (9), said feed head (9) comprising a fluid flow groove (22), feeding said body (7), said groove (22) being closed in the mounted position of the body (7) on the feed head (9) and said groove (22) being open in the separated position of the feed head (9) and the body (7).

22. Installation according to Claim 21, **characterized in that** said at least one device comprises a delivery valve (17) that is forced against said body (7) by a spring (19).

23. Installation according to Claim 21 or 22, **characterized in that** it comprises an installation (120) for feeding a flushing gas, for example compressed air, to the or each of the injection devices, allowing gas to be fed to the or each of the injection devices when the cooling installation is stopped.

24. Installation according to Claim 23, **characterized in that** the installation (120) for feeding a flushing gas to the or each of the injection devices comprises one or more feed lines for feeding flushing gas to each of the injection devices, the or each of the lines being provided with a nonreturn valve followed by a "pigtail" type system.
